# EUROPEAN PATENT APPLICATION

(11) **EP 3 085 588 A1**
(43) Date of publication of application: **26.10.2016**
(21) Application number: 16165236.7
(22) Date of filing: 14.04.2016
(51) Int. Cl.: B60R 25/24, G07C 9/00

(54) **ELECTRONIC KEY SYSTEM**

(30) Priority: 23.04.2015 JP 2015088646
(71) Applicant: KABUSHIKI KAISHA TOKAI RIKA DENKI SEISAKUSHO, Niwa-gun, Aichi 480-0195 (JP)
(72) Inventor: SOBUE, Kazunori, Niwa-gun, Aichi 480-0195 (JP); MORI, Hiroshi, Niwa-gun, Aichi 480-0195 (JP); ITAKURA, Hirokazu, Niwa-gun, Aichi 480-0195 (JP); FUKAGAI, Tadashi, Niwa-gun, Aichi 480-0195 (JP); KAWAMURA, Tetsuya, Niwa-gun, Aichi 480-0195 (JP)
(74) Representative: TBK

(57) **Abstract**

An electronic key system (1) includes electronic keys (3) and a device (2) to which the electronic keys (3) are registered. The device (2) transmits a call signal, and when receiving a response signal transmitted from at least one of the electronic keys (3) that has received the call signal, the device (2) is configured to analyze the received response signal, identify the at least one of the electronic keys (3) that transmitted the response signal, and enable operation of the device (2) with the identified at least one of the electronic keys (3). The response signal of each of the electronic keys (3) includes, from a code position for a particular code, code positions that are temporally non-overlapped with one another. The code positions include identification code positions, to which identification codes of the electronic keys (3) are assigned, and fixed code positions, to which fixed codes are assigned. Each of the electronic keys (3) transmits an identification code at an identification code position that is assigned a corresponding identification code and does not transmit a code at an identification code position assigned an identification code of another electronic key (3).

## Description

The present invention relates to an electronic key system that transmits a call signal from a device to which electronic keys are registered, analyzes a signal sent in response to the call signal to identify an electronic key, and allows the identified electronic key to operate a device.

Japanese Laid-Open Patent Publication No. 2011-21428 discloses an example of an electronic key system that uses time-division multiplexing for communication between a vehicle and an electronic key. The vehicle transmits a wake-up signal, and the electronic key transmits an acknowledgement (ACK) signal in response to the wake-up signal. The ACK signal is assigned an identification code that serves as information for identifying the electronic key. Electronic keys have identification codes set so that the identification codes are not temporally overlapped from a particular code. Thus, an electronic key is identifiable from the position of the identification code on the time axis.

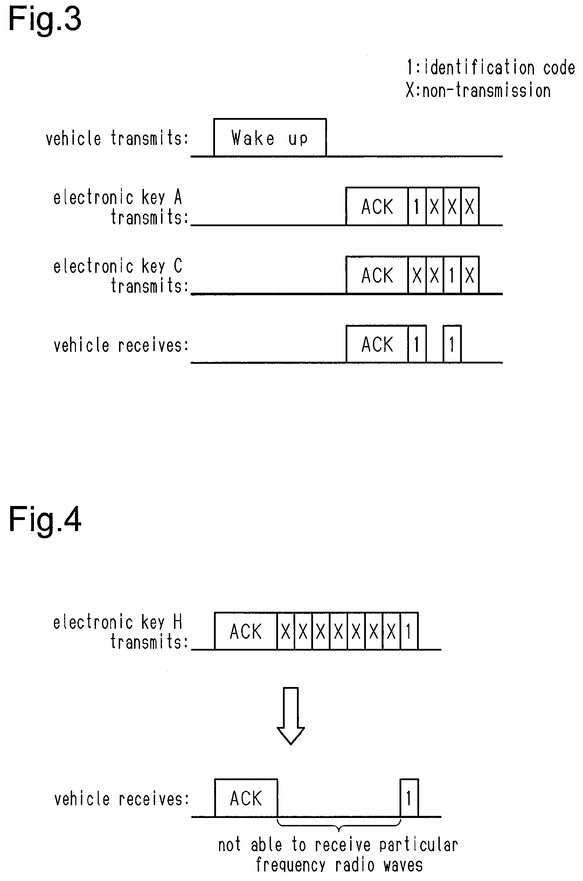

Fig. 3 shows a case in which the maximum number of electronic keys that can be registered to the vehicle is four, and two (A and C) of the four registered electronic keys (A to D) are actually held by a user. The identification codes of the electronic keys are assigned the four codes following the ACK code, which indicates an ACK signal, without temporally overlapping one another. The first code following the ACK code is assigned the identification code of electronic key A. The second code is assigned the identification code of electronic key B, the third code is assigned the identification code of electronic key C, and the fourth code is assigned the identification code of electronic key D. Each key transmits the binary information of "1" assigned to where the identification code is located and does not transmit the other three codes (indicated as X).

In response to a wake-up signal from the vehicle, electronic key A and electronic key C each transmit an ACK signal. In the ACK signal of electronic key A, "1" is assigned to the first one of the four codes following the ACK code. In the ACK signal of electronic key C, "1" is assigned to the third one of the four codes following the ACK code. After the vehicle receives the ACK codes, identification code "1" for electronic key A and identification code "1" for electronic key C are aligned from the ACK code on the time axis. Since the first one of the four codes following the ACK code is "1", electronic key A is identified. In the same manner, since the third one of the four codes following the ACK code is "1", electronic key C is identified.

Fig. 4 shows a case in which the number of electronic keys that can be used is increased. The maximum number of electronic keys that can be registered to the vehicle is, for example, eight. One (H) of the eight registered electronic keys (A to H) is carried by a user. In the same manner as described above, the identification codes of the eight electronic keys are assigned the eight codes following the ACK code so that the identification codes do not temporally overlap one another. The first one of the eight codes following the ACK code is assigned the identification code of electronic key A, and the eighth code is assigned the identification code of electronic key H. Each key transmits the binary information of "1" assigned to where the identification code is located and does not transmit the other seven codes (indicated as X).

In this case, an ACK signal is transmitted from only electronic key H in response to a wake-up signal. In the ACK signal of electronic key H, "1" is assigned to the eighth one of the eight codes following the ACK code. Thus, after the vehicle receives the ACK signal, nothing is transmitted during the time corresponding to the seven codes between the ACK code and the identification code "1" of electronic key H. When the non-transmission time is long, a vehicle receiver may not be able to demodulate the identification code.

It is an object of the present invention to provide an electronic key system that maintains the performance of a receiver.

The present invention maintains the performance of a receiver.
Fig. 1 is a schematic view showing an electronic key system.
Fig. 2 is a schematic diagram showing ACK signals that include fixed codes.
Fig. 3 is a schematic diagram of a time-division multiplexing process.
Fig. 4 is a schematic diagram when non-transmission time is long.

One embodiment of an electronic key system will now be described.

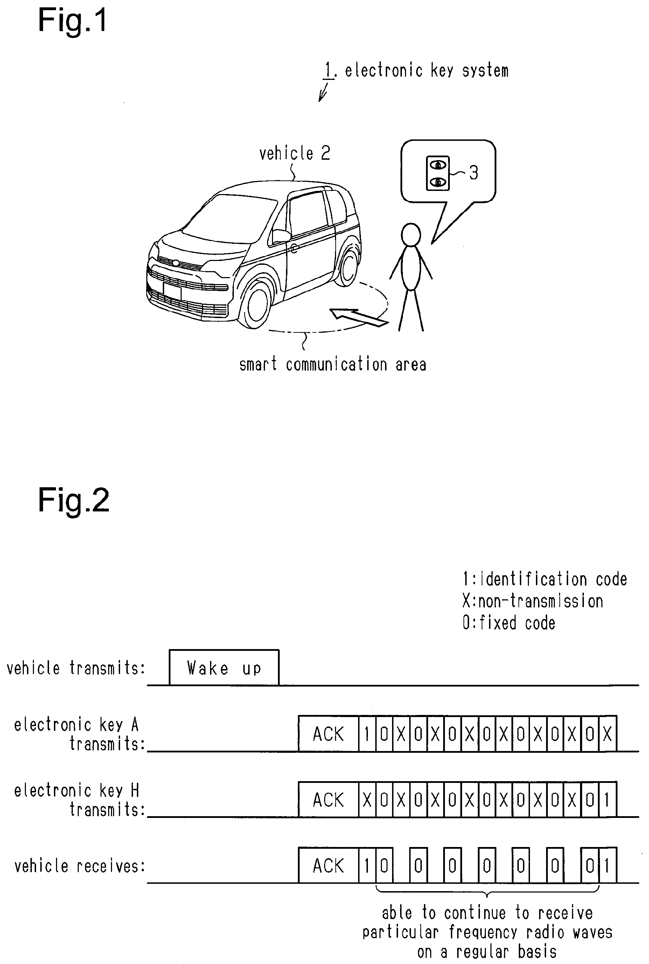

As shown in Fig. 1, an electronic key system 1 performs bidirectional wireless communication between a vehicle 2 and an electronic key 3 so that the vehicle 2 becomes operable after the electronic key 3 is verified through the communication. The vehicle 2 corresponds to a device.

The communication is referred to as smart communication. In the smart communication, a wake-up signal is transmitted on a low-frequency (LF) band radio wave from an electronic control unit (ECU) of the vehicle 2. The area that the wake-up signal reaches defines a smart communication area, which is located around the vehicle 2. The wake-up signal corresponds to a call signal.

When receiving the wake-up signal, the electronic key 3 transmits an ACK signal on an ultrahigh-frequency (UHF) band radio wave to respond to the call of the wake-up signal. The ACK signal is transmitted from the electronic key 3 under the condition that the electronic key 3 is located in the smart communication area. The ACK signal corresponds to a response signal. The ACK signal includes an identification code that serves as information for identifying the electronic key 3.

When receiving the ACK signal, the vehicle 2 transmits an LF signal in the next phase. When receiving the LF signal, the electronic key 3 transmits an UHF signal in the next phase. In the smart communication, the transmission and reception of the LF signal and the UHF signal are alternately performed a predetermined number of times. The UHF signal in the final phase includes an identification (ID) unique to the electronic key 3. The UHF signal is analyzed when received by the ECU of the vehicle 2. Operation of the vehicle 2 is enabled under the condition that the UHF signal includes an ID that is verified with a reference ID registered to the vehicle 2. That is, operation of the vehicle 2 is enabled with the electronic key 3 registered to the vehicle 2. For example, eight electronic keys 3 can be registered to the vehicle 2. In the present example, the maximum eight electronic keys 3 are registered to the vehicle 2. Operation of the vehicle 2 is enabled with any one of the electronic keys 3.

The operation of the electronic key system 1 will now be described.

Fig. 2 shows a case in which two (A and H) of the eight registered electronic keys 3 (A to H) are carried by the user. An ACK signal transmitted in response to a wake-up signal is configured to include identification codes of electronic keys A to H after the ACK code without temporally overlapping one another. For example, the first one of the fifteen codes following the ACK code is assigned the identification code of electronic key A, the third code is assigned the identification code of electronic key B, and the fifth code is assigned the identification code of electronic key C. That is, (2n-1)th code is assigned the identification code of each of electronic keys A to H (n = 1 to 8).

In the ACK signal of electronic key A, the code position where the identification code of electronic key A is assigned (identification code position) is set to the binary information of "1" that serves as the identification code of electronic key A. There is no transmission in the ACK signal from the code positions where the identification codes of the other electronic keys B to H are assigned (indicated as X). Further, the remaining code positions (fixed code positions) are set to the binary information of "0" that serves as a fixed code. That is, the ACK signal includes a plurality of code positions to sequentially transmit a plurality of codes. The code positions include code positions for transmitting identification codes and code positions for transmitting fixed codes. Thus, the ACK signal of electronic key A includes fifteen codes following the ACK code, namely, "10X0X0X0X0X0X0X".

The same applies to the ACK signal of electronic key H. That is, the code position assigned to the identification code of electronic key H is set to the binary information of "1" that serves as the identification code of electronic key H. There is no transmission in the ACK signal from the code positions where the identification codes of the other electronic keys A to G are assigned (indicated as X). Further, the remaining code positions (fixed code positions) include the binary information of "0" that serves as a fixed code. Thus, the ACK signal of electronic key H includes fifteen codes following the ACK code, namely, "X0X0X0X0X0X0X01".

In this case, the ACK signals are transmitted from electronic keys A and H in response to a wake-up signal. After the vehicle 2 receives the ACK codes, the fixed codes "0," the non-transmitted codes, the identification code "1" of electronic key A, and the identification code "1" of electronic key H are aligned from the ACK code on the time axis. In this example, the first one of the fifteen codes following the ACK code is "1", the second code is "0", every other code between the third and fourteenth codes is "0", and the fifteenth code is "1". In other words, the first and fifteenth ones of the fifteen codes following the ACK code are "1." A period of time corresponding to the thirteen codes exists between the first and fifteenth codes. However, this is not a period during which there is no transmission. Rather, the fixed codes of "0" are transmitted during the time corresponding to the thirteen codes.

Thus, in this example, the non-transmission time is reduced to the time corresponding to a single code. This allows the receiver of the vehicle 2 to continue to receive UHF radio waves on a regular basis. After the receiver performs demodulation, electronic key A is identified since the first one of the fifteen codes following the ACK code is "1 ". In the same manner, electronic key H is identified since the fifteenth one of the fifteen codes following the ACK code is "1". This enables operation of the vehicle 2 with electronic key A or H through subsequent ID verification.

The present embodiment has the advantages described below.
(1) Even when the number of the electronic keys 3 that can be used increases, there may be only one electronic key 3 that transmits an ACK signal. In such a case, the fixed codes "0" reduce the time during which there is no transmission even when many codes are included in the ACK signal ahead of the identification code "1." This allows the receiver of the vehicle 2 to perform demodulation in a preferred manner. Thus, even when time-division multiplexing is used for communication between the vehicle 2 and the electronic key 3, the performance of the receiver is maintained.
(2) For example, in the ACK signal of electronic key H, the fixed codes "0" are assigned to the code positions ahead of the identification code "1" of electronic key H. Thus, fixed codes "0" allow for the recognition of transmission from electronic key H until identification code "1" of electronic key H is transmitted.

The above embodiment may be modified as described below.

In the ACK signal of each electronic key 3, fixed codes "0" may be located only at the code positions ahead of the identification code "1" of each electronic key 3. In such a structure, fixed codes "0" are not located at the code positions behind the identification code "1" for each electronic key 3. This reduces power used to transmit the ACK signal from each electronic key 3.

For example, in the ACK signal of electronic key A, the fifteen codes following the ACK code may be "1XXXXXXXXXXXXXX" (only first code is transmitted). In the ACK signal of electronic key E, the fifteen codes following the ACK code may be "X0X0X0X01XXXXXX" (fixed codes "0" are located in front of the ninth code that is assigned the identification code "1" of electronic key E). In the ACK signal of electronic key H, the fifteen codes following the ACK code may be "X0X0X0X0X0X0X01" (same as above embodiment).

The longest non-transmission time may be the time corresponding to two codes as long as the performance of the receiver of the vehicle 2 is maintained. For example, in the ACK signal of electronic key H, the eleven codes following the ACK code may be "XX0XX0XX0X1". In such a case, eight codes in total other than fixed code "0" are respectively assigned identification codes of electronic keys A to H.

Alternatively, the longest non-transmission time may be the time corresponding to three codes. For example, in the ACK signal of electronic key H, the ten codes following the ACK code may be "XXX0XXX0X1". In such a case, eight codes in total other than fixed code "0" are respectively assigned identification codes of electronic keys A to H.

In the same manner, the longest non-transmission time may be the time corresponding to four codes. For example, in the ACK signal of electronic key H, the nine codes following the ACK code may be "XXXX0XXX1". In such a case, eight codes in total other than fixed code "0" are respectively assigned identification codes of electronic keys A to H.

The identification code of each electronic key 3 may be the binary information of "0" instead of "1", and the fixed code may be "1".

In this specification, code represents data of one or more bits.

The device is not limited to the vehicle 2. The present invention may be applied to an electronic key system that allows for operation of, for example, a building door, a lighting device, and an electrical appliance.
An electronic key system (1) includes electronic keys (3) and a device (2) to which the electronic keys (3) are registered. The device (2) transmits a call signal, and when receiving a response signal transmitted from at least one of the electronic keys (3) that has received the call signal, the device (2) is configured to analyze the received response signal, identify the at least one of the electronic keys (3) that transmitted the response signal, and enable operation of the device (2) with the identified at least one of the electronic keys (3). The response signal of each of the electronic keys (3) includes, from a code position for a particular code, code positions that are temporally non-overlapped with one another. The code positions include identification code positions, to which identification codes of the electronic keys (3) are assigned, and fixed code positions, to which fixed codes are assigned. Each of the electronic keys (3) transmits an identification code at an identification code position that is assigned a corresponding identification code and does not transmit a code at an identification code position assigned an identification code of another electronic key (3).

Description of Reference Characters
1: electronic key system
2: vehicle (device)
3: electronic key

## Claims

1. An electronic key system (1) comprising:
electronic keys (3); and
a device (2) to which the electronic keys (3) are registered, wherein the device (2) transmits a call signal, and when receiving a response signal transmitted from at least one of the electronic keys (3) that has received the call signal, the device (2) is configured to analyze the received response signal, identify the at least one of the electronic keys (3) that has transmitted the response signal, and enable operation of the device (2) with the identified at least one of the electronic keys (3),
the electronic key (3) system **characterized in that**:
the response signal of each of the electronic keys (3) includes, from a code position for transmitting a particular code, code positions that are temporally non-overlapped with one another,
the code positions include identification code positions, to which identification codes of the electronic keys (3) are assigned, and fixed code positions, to which fixed codes are assigned, and
each of the electronic keys (3) transmits an identification code at an identification code position that is assigned a corresponding identification code and does not transmit a code at an identification code position assigned an identification code of another electronic key (3).

2. The electronic key system (1) according to claim 1, wherein each of the electronic keys (3) transmits a fixed code from one of the fixed code positions ahead of an identification code position to which an identification code of the electronic key (3) is assigned.

3. The electronic key system (1) according to claim 2, wherein each of the electronic keys (3) does not transmit a code from a fixed code position behind the identification code position to which the identification code of the electronic key (3) is assigned.

4. The electronic key system (1) according to any one of claims 1 to 3, wherein an identification code and a code position are alternately arranged in the code positions.

5. The electronic key system (1) according to any one of claims 1 to 3, wherein two identification codes or more and a code position are alternately arranged in the code positions.

6. The electronic key system (1) according to any one of claims 1 to 5, wherein at least one of the fixed codes is a code transmitted by every one of the electronic keys (3).

7. The electronic key system (1) according to any one of claims 1 to 6, wherein the at least one of the fixed codes is a common code shared by every one of the electronic keys (3).

8. The electronic key system (1) according to any one of claims 1 to 7, wherein the at least one of the fixed codes is a code distinguishable from an identification code.

9. The electronic key system (1) according to any one of claims 1 to 8, wherein each code includes one or more bits.
